# FASCICULE DE BREVET EUROPEEN

(11) **EP 3 206 194 B1**
(45) Date de publication et mention de la délivrance du brevet: **07.09.2022**
(21) Numéro de dépôt: 17155553.5
(22) Date de dépôt: 10.02.2017
(51) Int. Cl.: G07F 7/06, G06Q 20/18

(54) **MACHINE DE RECYCLAGE D'APPAREILS ÉLECTRONIQUES ET SON PROCÉDÉ DE FONCTIONNEMENT**
RECYCLING-MASCHINE VON ELEKTRONISCHEN GERÄTEN, UND IHR FUNKTIONSVERFAHREN
MACHINE FOR RECYCLING ELECTRONIC DEVICES AND OPERATING METHOD THEREOF

(30) Priorité: 12.02.2016 FR 1651161
(43) Date de publication de la demande: 16.08.2017
(73) Titulaire: Smail, Salim, 95200 Sarcelles (FR)
(72) Inventeur: Smail, Salim, 95200 Sarcelles (FR)
(74) Mandataire: Germain Maureau

(56) Documents cités:
- US-A1- 2008 097 770
- US-A1- 2008 281 691
- US-A1- 2010 169 231
- US-A1- 2013 226 679
- US-A1- 2013 246 212
- US-A1- 2014 333 761

## Description

La présente invention concerne une machine de recyclage d'appareils électroniques tels que les tablettes et les smartphones (ou téléphones intelligents) par exemple, et son procédé de fonctionnement.

L'invention concerne plus particulièrement le marché secondaire de la revente/réparation d'appareils électroniques d'occasion.

Le document US2014/0333761 décrit une machine de retour automatique d'articles.

Le document US2008/281691 décrit une méthode et un système qui proposent aux consommateurs un encouragement à recycler des appareils électroniques sous forme d'un rabais. Le document US2008/097770 décrit un appareil de recyclage d'appareils électroniques tels que des cartouches d'encre.

On connait également de l'art antérieur des kiosques électroniques permettant de revendre ou de recycler des appareils électroniques d'occasion comme celui décrit dans le document antérieur US2013/226679.

Ce document décrit un kiosque électronique permettant d'identifier un téléphone cellulaire (marque, modèle), d'inspecter automatiquement le téléphone pour faire un état des lieux de son état et de proposer une compensation financière à un utilisateur en échange de la reprise de son téléphone.

L'utilisateur peut ainsi introduire son téléphone dans le kiosque et recevoir en échange une compensation financière.

Ce kiosque électronique comprend un écran tactile servant d'interface avec l'utilisateur lui permettant de saisir et de recevoir des informations concernant son téléphone.

Il comprend une ouverture pour insérer son téléphone dans le kiosque et une zone de stockage pour stocker le téléphone. Il comprend également un distributeur de sacs permettant de distribuer un sac à l'utilisateur pour que ce dernier puisse emballer le téléphone avant son introduction dans le kiosque.

La présente invention vise à perfectionner un tel kiosque.

L'invention concerne une machine de recyclage d'appareils électroniques selon la revendication 1

Ainsi, la machine de recyclage selon l'invention offre plusieurs possibilités à l'utilisateur: remboursement partiel du prix de son appareil électronique, remplacement cet appareil par une autre, ou bien combinaison de ces deux possibilités.

A noter que l'appareil de remplacement peut être un appareil neuf ou tout autre appareil ayant déjà fait l'objet d'un reconditionnement par la machine.

Un appareil reconditionné peut être un appareil déjà collecté, nettoyé (i.e. effacement des données) et réemballé par la machine.

La mise en revente des appareils reconditionnés se fait de préférence dans un compartiment dissocié de la partie de diagnostic et de stockage.

La mise en revente de ces appareils peut se faire avec ou sans intervention humaine.

Suivant d'autres caractéristiques optionnelles de la présente invention :
- lesdits moyens de diagnostic sont adaptés pour classer ledit appareil électronique dans l'une des trois catégories suivantes : très bon état / bon état / non fonctionnel,
Selon l'invention, ladite machine comprend des moyens pour emballer l'appareil électronique avec un emballage de protection. Les moyens d'emballage comprennent une zone d'emballage et un plateau de réception de l'appareil électronique placé dans la zone d'emballage, des moyens de convoyage pour transférer l'appareil électronique de l'ouverture jusqu'à la zone d'emballage, et une zone de stockage pour stocker l'appareil électronique emballé.

On entend par le terme « emballé », un appareil électronique qui est complètement ou partiellement entouré par un emballage de protection ou bien recouvert de deux couches d'emballage de protection.

L'invention fournit ainsi une machine de recyclage d'appareils électroniques permettant de protéger efficacement et automatiquement les appareils électroniques des chocs à l'intérieur de la machine de recyclage.

Selon un mode de réalisation possible, les moyens de convoyage comprennent un support mobile supportant l'appareil électronique et des moyens d'actionnement pour transférer le support mobile de l'ouverture jusqu'à la zone d'emballage. Le support mobile est guidé par au moins un rail de guidage et est positionné plus haut que le plateau de réception des moyens d'emballage de façon à permettre la chute de l'appareil électronique du support mobile jusqu'au plateau de réception.

Selon l'invention, la zone de stockage est confondue avec la zone d'emballage. Les appareils électroniques sont stockés dans la zone d'emballage et empilés les uns sur les autres sur le plateau de réception. Deux appareils électroniques consécutifs sont séparés par une couche d'emballage de protection rabattue sur chaque appareil électronique par un dispositif de rabattage de couche d'emballage de protection.

Ceci permet d'optimiser l'espace, d'obtenir une machine plus compacte et plus simple puisqu'il n'y a qu'une seule zone pour l'emballage et le stockage de l'appareil électronique. De plus, il n'y a pas besoin de moyens d'actionnement permettant de transférer l'appareil électronique emballé de la zone d'emballage vers la zone de stockage.

Selon un autre mode de réalisation possible, la machine de recyclage comprend des moyens de pesage de l'appareil électronique destinés à peser l'appareil électronique dans la zone d'emballage. Le plateau de réception de l'appareil électronique est relié mécaniquement au moyen de pesage pour permettre la pesée de l'appareil électronique.

Le pesage de l'appareil électronique permet d'obtenir une traçabilité particulièrement utile pour le calcul de l'écotaxe.

Ce mode de réalisation fournit ainsi une machine de recyclage simplifiée dans laquelle le plateau de réception des moyens d'emballage sert également à peser l'appareil électronique.

Selon un autre mode de réalisation possible, la machine de recyclage comprend des moyens d'alimentation de l'appareil électronique comportant différents câbles d'alimentation adaptés à différents modèles d'appareil électronique.

Ceci permet d'éviter que l'appareil électronique ne se décharge pendant l'étape d'identification.

La machine de recyclage comprend également des moyens de déconnection du câble d'alimentation pour le déconnecter automatiquement lors de la chute de l'appareil électronique sur le plateau de réception du moyen d'emballage.

Selon un autre mode de réalisation possible, la longueur du câble d'alimentation est inférieure à la distance entre les moyens d'alimentation et le plateau de réception du moyen d'emballage de façon à ce que le câble d'alimentation se déconnecte automatiquement de l'appareil électronique par traction lors de sa chute dans la zone d'emballage et avant son arrivée sur le plateau de réception du moyen d'emballage.

Le mode de réalisation possible permet ainsi de déconnecter automatiquement le câble d'alimentation de l'appareil électronique de façon simple et efficace. Il n'est pas nécessaire d'utiliser des moyens de déconnection supplémentaires.

L'invention concerne également un procédé de fonctionnement d'une machine de recyclage d'appareils électroniques selon la revendication 7

Le présent procédé peut comprendre les étapes optionnelles supplémentaires suivantes :
- classement dudit appareil électronique dans l'une des trois catégories suivantes : très bon état / bon état / non fonctionnel,
-
- les moyens de convoyage peuvent comprendre un support mobile,
-
- une étape de chute de l'appareil électronique du support mobile des moyens de convoyage jusqu'au plateau de réception des moyens d'emballage positionné plus bas que le support mobile, et
-

Selon un mode de réalisation possible, le procédé de fonctionnement comprend, avant l'étape d'identification, une étape de connexion d'un câble d'alimentation sur l'appareil électronique afin de le maintenir chargé pendant l'étape d'identification et une étape de déconnexion automatique du câble d'alimentation avant son arrivée sur le plateau de réception des moyens d'emballage.

Selon un autre mode de réalisation possible, la longueur du câble d'alimentation est inférieure à la distance entre les moyens d'alimentation et le plateau de réception des moyens d'emballage. Le câble d'alimentation se déconnecte de l'appareil électronique par traction lors de sa chute dans la zone d'emballage et avant son arrivée sur le plateau de réception du moyen d'emballage.

Selon un autre mode de réalisation possible, le procédé de fonctionnement comprend, après l'étape de connexion du câble d'alimentation sur l'appareil électronique, une étape d'identification automatique de l'appareil électronique au moyen d'un programme d'identification transféré de la machine de recyclage vers l'appareil électronique via le câble d'alimentation. Le programme d'identification est installé dans l'appareil électronique afin de récupérer des données d'identification et de les transférer de l'appareil électronique vers un système de contrôle prévu dans la machine de recyclage.

Selon un mode de réalisation optionnel de la présente invention, la machine de recyclage peut mettre en œuvre un procédé de diagnostic de la panne et de tarification de la réparation et/ou du rachat.

Selon un mode de réalisation optionnel de la présente invention, la machine de recyclage peut mettre en oeuvre un procédé de gestion de l'interface Homme-Machine (IHM), de diagnostic de l'état du téléphone et de vérification de l'authenticité de l'utilisateur.

Les caractéristiques de l'invention seront décrites plus en détail ci-dessous.

L'invention concerne une machine de recyclage d'appareils électroniques comprenant une enveloppe de protection externe et une interface utilisateur permettant de saisir et de visualiser des données concernant l'appareil électronique.

L'appareil électronique peut être une tablette ou un smartphone (ou téléphone intelligent), par exemple.

On entend par « recyclage », la revente, le don ou la réparation de l'appareil électronique.

L'interface utilisateur peut être un écran tactile ou un écran associé à un clavier, par exemple.

La machine de recyclage comprend une ouverture pour insérer l'appareil électronique dans la machine de recyclage.

La machine de recyclage comprend une porte pour obturer l'ouverture. La porte peut s'ouvrir de manière progressive sur une durée totale de 25 secondes, par exemple. En cas de défaut de fonctionnement ou de mise hors tension, une commande manuelle de type manivelle permet de forcer l'ouverture de porte.

La porte peut se fermer de manière progressive sur une durée totale de 30 secondes, par exemple. La porte peut se fermer en deux étapes. Elle peut commencer à se fermer rapidement jusqu'à 75% de la fermeture totale puis, après l'émission d'un avertisseur vocal du type « Attention veuillez enlever votre main », se fermer lentement pendant une durée de 3 secondes.

Ce procédé de fermeture permet un enlèvement tardif de la main de l'utilisateur.

La machine de recyclage comprend une caméra permettant l'inspection de l'appareil électronique. Les images de la caméra sont retransmises à un centre de contrôle distant.

Plusieurs caméras provenant de plusieurs machines de recyclage sont reliées à ce centre de contrôle.

Un opérateur positionné dans ce centre de contrôle peut analyser simultanément l'état de plusieurs appareils électroniques.

La machine de recyclage comprend des moyens d'impression pour imprimer à l'utilisateur un ticket sur lequel apparaît un devis.

Selon l'invention, la machine de recyclage comprend des moyens d'emballage pour emballer l'appareil électronique avec un emballage de protection.

Les moyens d'emballage comprennent une zone d'emballage dans laquelle est emballé l'appareil électronique.

L'emballage de protection est du papier bulle, par exemple, ou équivalent.

La machine de recyclage comprend des moyens de convoyage pour transférer l'appareil électronique de l'ouverture jusqu'à la zone d'emballage.

Les moyens de convoyage peuvent optionnellement comprendre un support mobile supportant l'appareil électronique et des moyens d'actionnement pour déplacer le support mobile au moins de l'ouverture jusqu'à la zone d'emballage.

Les moyens de convoyage comprennent éventuellement au moins un rail de guidage. Le support mobile est guidé par le rail de guidage qui est linéaire ou courbé.

Alternativement, les moyens de convoyage est un carrousel circulaire mobile en rotation et comportant plusieurs compartiments pour recevoir un appareil électronique.

La machine de recyclage comprend une zone de stockage pour stocker l'appareil électronique emballé.

Selon un mode de réalisation possible, le support mobile ou chariot du moyen de convoyage se déplace linéairement jusqu'à une position d'arrêt.

Le ou les rails de guidage sont inclinés de façon à provoquer la chute de l'appareil électronique dans la zone d'emballage située plus bas que les moyens de convoyage, lors de l'arrêt du support mobile.

Pour faciliter la chute de l'appareil électronique, une butée d'arrêt peut être prévue à l'extrémité arrière du rail, correspondant à la fin de course du support mobile, pour provoquer un arrêt brutal du support mobile afin de faciliter le décrochage de l'appareil électronique de ce dernier.

Les moyens d'emballage comprennent un plateau de réception de l'appareil électronique et un rouleau de papier bulle. Le plateau de réception est positionné plus bas que les moyens de convoyage.

Une portion du rouleau de papier bulle est déroulée sur le plateau de réception. Ainsi, lors de sa chute, l'appareil électronique est amorti par le papier bulle. Autrement dit, l'appareil électronique est protégé par le papier bulle après sa chute. L'appareil électronique comprend une première face reposant sur le papier bulle.

Les moyens d'emballage comprennent un dispositif de rabattement permettant de rabattre une couche de papier bulle sur une deuxième face de l'appareil électronique.

Les deux faces de l'appareil électronique sont ainsi protégées par le papier bulle.

Selon l'invention, la zone d'emballage est confondue avec la zone de stockage.

Lorsqu'un deuxième appareil électronique est inséré dans l'ouverture de la machine de recyclage, ce dernier est transféré jusqu'à la zone d'emballage de façon à tomber sur le précédent appareil électronique emballé. La chute du deuxième appareil électronique est amortie par la couche de papier bulle reposant sur la deuxième face du premier appareil électronique emballé.

On obtient ainsi un empilement d'appareils électroniques emballés dans la zone de stockage. Cet empilement est supporté par le plateau de réception.

La machine de recyclage peut selon un mode de réalisation comprendre des moyens de pesage de l'appareil électronique destinés à peser l'appareil électronique avant ou après l'emballage. Les moyens de pesage sont reliés au plateau de réception du moyen d'emballage.

Le plateau de réception du moyen d'emballage est utilisé alors pour peser l'appareil électronique. L'appareil électronique est pesé de préférence avant son emballage.

Lors de la réception d'un premier appareil électronique, les moyens de pesage mesure un poids P. Lors de la réception d'un deuxième appareil électronique, les moyens de pesage mesurent un poids total P+1 consistant au poids total des deux appareils électroniques.

Pour obtenir le poids de l'appareil électronique, un calculateur soustrait le poids P du premier appareil électronique au poids total P+1. Ce même procédé est appliqué pour les appareils électroniques ultérieurement déposés dans la machine de recyclage.

Cette étape de pesage permet alors d'assurer la traçabilité de chaque appareil électronique et de pouvoir calculer l'écotaxe perceptible.

La machine de recyclage peut comprendre selon un mode de réalisation possible, des moyens d'alimentation de l'appareil électronique comportant différents câbles d'alimentation. Chaque câble d'alimentation comprend un connecteur adapté à un modèle d'appareil électronique spécifique. Le nombre de câbles d'alimentation peut être de cinq, par exemple.

Selon un mode de réalisation possible, les moyens d'alimentation comprennent des moyens d'actionnement permettant de déplacer les câbles d'alimentation entre une position de repos à l'intérieur de la machine et une position de préhension les rendant accessibles par l'utilisateur.

Les moyens d'alimentation comprennent un dispositif d'enroulement automatique permettant de rembobiner automatiquement le fil du câble d'alimentation dans un support lorsque le connecteur est déconnecté de l'appareil électronique.

Le dispositif d'enroulement peut comprendre une bobine d'enroulement du câble associée à un ressort de rappel tel un ressort à spiral, par exemple.

Ainsi, l'utilisateur peut connecter un câble d'alimentation à son appareil électronique qui est adapté à ce dernier pour le maintenir chargé pendant qu'il saisit des données dans la machine de recyclage. Ceci est particulièrement utile lorsque l'appareil électronique est complètement déchargé.

L'utilisateur peut déconnecter le câble d'alimentation de l'appareil électronique avant l'insertion de ce dernier dans l'ouverture de la machine de recyclage.

Alternativement, la machine de recyclage peut comprendre des moyens de déconnection du connecteur de l'appareil électronique pour le déconnecter automatiquement avant l'arrivée de l'appareil électronique sur le plateau de réception du moyen d'emballage.

Selon un mode de réalisation possible, la longueur du câble d'alimentation est inférieure à la distance entre les moyens d'alimentation et le plateau de réception du moyen d'emballage de façon à ce que le câble d'alimentation se déconnecte de l'appareil électronique par traction lors de sa chute dans la zone d'emballage et avant son arrivée sur le plateau de réception du moyen d'emballage. Le plateau de réception est dans ce cas positionné plus bas que les moyens de convoyage ou plus précisément du support mobile.

Selon un autre mode de réalisation possible, les moyens de déconnection comprennent une butée sur la partie arrière du support mobile des moyens de convoyage. La partie arrière du support mobile est celle qui est la plus proche de l'ouverture.

La longueur du câble d'alimentation est inférieure à la distance entre la zone d'emballage et les moyens d'alimentation de façon à ce que l'appareil électronique vienne en butée contre la butée du support mobile lorsque ce dernier arrive avant la zone d'emballage de façon à exercer une traction sur le câble d'alimentation pour le déconnecter de l'appareil électronique.

Plus précisément, la longueur du câble d'alimentation est inférieure à la distance entre les moyens d'alimentation et la position d'arrêt du support mobile des moyens de convoyage.

L'appareil électronique est ainsi déconnecté automatiquement du câble électronique avant son arrivé sur le plateau de réception, que ce dernier soit plus bas ou au même niveau que les moyens de convoyage.

Selon un mode de réalisation possible, la machine de recyclage comprend des moyens d'aspiration de liquide permettant d'extraire de la machine de recyclage d'éventuels liquides (eau, boisson chaudes, sodas, jus, etc.) qui auraient été déversés malencontreusement par un utilisateur ou lors d'un nettoyage de maintenance.

Plus précisément, les moyens d'aspiration peuvent aspirer des liquides dans l'ouverture, le support mobile ou dans la zone de stockage.

Les moyens d'aspiration comprennent une pompe commandée par un détecteur de liquide. L'évacuation des éventuels liquides se fait vers un récipient d'accumulation.

L'invention concerne également un procédé de fonctionnement d'une machine de recyclage d'appareil électronique selon la revendication 7.

La machine de recyclage permet de vendre, donner ou de faire réparer un appareil électronique.

Selon un procédé de fonctionnement possible, l'interface utilisateur affiche un message proposant à l'utilisateur de vendre son appareil électronique ou d'obtenir un diagnostic.

Lorsque l'utilisateur choisit de vendre son appareil électronique, il s'ensuit une étape d'identification de l'appareil électronique.

L'interface utilisateur affiche plusieurs choix d'appareils possibles et demande à l'utilisateur de choisir la catégorie de l'appareil électronique comme par exemple, si l'appareil est un smartphone ou une tablette.

Après cette étape, l'interface utilisateur affiche plusieurs choix de marques possibles et l'utilisateur choisit la marque de son appareil.

Après cette étape, l'interface utilisateur affiche plusieurs choix de modèles possibles et l'utilisateur choisit le modèle de son appareil.

L'interface utilisateur affiche ensuite un prix de reprise possible en fonction du modèle et de l'état de l'appareil.

L'interface utilisateur affiche un message proposant plusieurs états possibles comme par exemple, « Excellent », « Bon état », « Usagé », « Fonctionnel avec rayures » et « Fonctionnel écran cassé ». Un prix de reprise est associé à un état de l'appareil.

Comme décrit précédemment, une caméra fixée sur la machine de recyclage permet à un opérateur de vérifier visuellement l'état de l'appareil électronique.

L'interface utilisateur affiche un message demandant ensuite à l'utilisateur s'il a l'appareil électronique avec lui ou non. S'il l'a avec lui, le processus de vente continu, sinon il est annulé.

Si l'utilisateur confirme qu'il a l'appareil électronique avec lui, l'interface utilisateur affiche un message l'invitant à vérifier l'état de recharge de l'appareil et de retirer la housse de protection s'il y en a une.

L'interface utilisateur affiche un message demandant à l'utilisateur de présenter sa carte d'identité pour qu'elle soit scannée par un scanner. La machine de recyclage valide ensuite. Si l'utilisateur ne présente pas sa carte d'identité, l'opération est annulée.

La machine de recyclage imprime un code barre via une imprimante. L'utilisateur est invité par la machine à le coller sur son appareil électronique.

L'utilisateur appuie ensuite sur un bouton ou un icône sur un écran d'affichage pour ouvrir une porte.

L'interface utilisateur affiche un message demandant à l'utilisateur de connecter son appareil électronique à un câble d'alimentation proposé et de le poser dans l'ouverture indiquée.

L'interface utilisateur affiche un message demandant à l'utilisateur de taper un numéro, comme celui-ci par exemple « ^{∗}#06# », sur l'interface utilisateur et de faire apparaître le numéro IMEI sur son appareil électronique. Un opérateur distant visualise ensuite le numéro IMEI au moyen d'une caméra.

En variante, l'utilisateur peut être invité à choisir l'option « faire confiance à l'ordinateur » pour que la machine puisse se connecter à appareil.

La machine de recyclage lit alors automatiquement les données de l'appareil, comme décrit ultérieurement.

L'interface utilisateur affiche ensuite un message demandant à l'utilisateur de taper sur le bouton « fermer la porte et continuer ».

La machine de recyclage fait un diagnostic complet de l'appareil (hardware et software).

Ce diagnostic peut être un diagnostic automatique, utilisant un procédé de diagnostic, utilisant un réseau de neurones ANN (« Artificial Neuronal Network ») tel que décrit ultérieurement.

L'interface utilisateur affiche le résultat du diagnostic avec le prix de la réparation et/ou de la reprise. Le prix de reprise est choisi selon l'état de l'appareil et parmi les prix de reprise proposés précédemment, quant au prix de la réparation il est calculé sur la base des prix des pièces et du temps de réparation renseignés et réactualisés régulièrement dans une base de données.

La machine de recyclage prend une photo du client pour la comparer avec celle de sa carte d'identité pour valider.

L'interface utilisateur affiche les conditions générales d'utilisations de la machine et d'achat et invite l'utilisateur à les valider.

La machine imprime ensuite un bon d'achat. Alternativement, la machine de recyclage peut payer l'utilisateur en espèce. Alternativement la machine peut payer l'utilisateur directement sur la carte bancaire de l'utilisateur qui l'aura préalablement inséré dans un lecteur idoine, servant aux transactions financières par cartes bancaires.

Si l'utilisateur choisit l'option diagnostic au lieu de la vente, il s'ensuit la même étape d'identification de l'appareil électronique que pour l'option de vente.

L'interface utilisateur affiche alors plusieurs choix d'appareils possibles et demande à l'utilisateur de choisir la catégorie de l'appareil électronique comme par exemple, si l'appareil est un smartphone ou une tablette.

Après cette étape, l'interface utilisateur affiche plusieurs choix de marques possibles et l'utilisateur choisit la marque de son appareil.

Après cette étape, l'interface utilisateur affiche plusieurs choix de modèles possibles et l'utilisateur choisit le modèle de son appareil électronique.

Alternativement, cette identification est réalisée par un opérateur distant qui visualise l'appareil électronique via une caméra.

L'utilisateur choisit ensuite le composant ou la fonction de l'appareil électronique qui est en panne parmi une liste de composants affichés sur un écran comme par exemple la batterie, le bouton d'arrêt/marche, le lecteur de carte Sim/mémoire, le flash, la caméra avant, la caméra arrière, le vibreur/sonnerie, le logiciel, la Wifi, le réseau, le son, si l'appareil est bloqué sur l'icône du câble réseau, l'écran tactile, si l'appareil est tombé dans l'eau, si le réseau est bloqué, le connecteur de charge, les capteurs.

L'utilisateur choisit ensuite le composant en panne.

Alternativement, le diagnostic est réalisé par un opérateur distant qui visualise l'appareil électronique via une caméra.

La machine de recyclage imprime un devis de réparation et oriente l'utilisateur vers un centre de réparation partenaire le plus proche.

En variante, la machine de recyclage garde l'appareil électronique. Après réparation, l'utilisateur le récupère soit directement au centre de réparation, soit auprès de la machine qui comprend un compartiment de stockage et de restitution aux clients des appareils réparés, la restitution ayant lieu suivant une opération de paiement par le client de la prestation de réparation effectuée.

Cette dernière opération de paiement est réalisée soit en espèces au moyen de l'appareil de paiement en espèces idoine, soit, et de manière préférentielle par carte bancaire, au moyen d'un appareil de paiement par carte bancaire idoine. Préférentiellement, l'appareil de paiement par carte bancaire par l'utilisateur est le même que celui de remboursement du client sur sa carte bancaire par la machine. Préférentiellement, l'appareil de paiement en espèces par l'utilisateur est le même que celui de remboursement du client en espèces par la machine.

Le procédé de fonctionnement de la machine de recyclage lorsque la machine de recyclage garde l'appareil électronique est décrit ci-dessous plus en détail.

Le procédé de fonctionnement de la machine de recyclage, comme décrit précédemment, comprend une étape d'identification de l'appareil électronique manuelle ou automatique.

Le procédé de fonctionnement de la machine de recyclage peut comprendre ou non, une étape de connexion d'un câble d'alimentation sur l'appareil électronique par l'utilisateur afin de le maintenir chargé.

Dans ce cas, il peut également comprendre une étape d'identification automatique de l'appareil électronique au moyen d'un programme d'identification (« plugin ») transféré de la machine de recyclage vers l'appareil électronique via le câble d'alimentation.

Le programme d'identification est installé dans l'appareil électronique afin de récupérer des données d'identification et de les transférer de l'appareil électronique vers un système de contrôle prévu dans la machine de recyclage.

La machine de recyclage récupère le numéro d'IMEI, la marque et le modèle de l'appareil électronique.

Alternativement, cette identification automatique peut être réalisée par une liaison Bluetooth ou équivalent.

Le procédé de fonctionnement de la machine de recyclage comprend également une étape d'insertion de l'appareil électronique dans une ouverture prévue dans la machine de recyclage.

Le procédé de fonctionnement de la machine de recyclage comprend une étape de transfert de l'appareil électronique de l'ouverture jusqu'à une zone d'emballage par des moyens de convoyage.

Selon un mode de réalisation possible, le support mobile transfert l'appareil électronique jusqu'à une position d'arrêt durant laquelle l'appareil électronique tombe dans une zone d'emballage et plus précisément sur un plateau de réception.

Le procédé de fonctionnement de la machine de recyclage comprend ensuite une étape d'emballage de l'appareil électronique dans la zone d'emballage par des moyens d'emballage, comme décrit précédemment.

Le procédé de fonctionnement de la machine de recyclage peut éventuellement comprendre une étape de pesage de l'appareil électronique, comme décrit précédemment.

Si un câble d'alimentation a été connecté à l'appareil électronique, le procédé de fonctionnement de la machine de recyclage comprend, après le transfert de l'appareil électronique vers la zone d'emballage, une étape de déconnexion automatique du câble d'alimentation avant son arrivée dans la zone d'emballage.

Les moyens d'emballage peuvent comprendre selon un mode de réalisation possible, un plateau de réception positionné plus bas que les moyens de convoyage et une longueur de câble d'alimentation inférieure à la distance entre les moyens d'alimentation et le plateau de réception. De cette façon, l'appareil électronique est convoyé jusqu'à la zone d'emballage puis effectue une chute libre vers le plateau de réception exerçant une traction sur le câble d'alimentation pour le déconnecter de l'appareil électronique.

Le connecteur du câble d'alimentation est déconnecté grâce au poids de l'appareil électronique et à l'énergie cinétique générée par la chute de l'appareil électronique dans la zone d'emballage.

Selon un mode de réalisation possible, le procédé de fonctionnement permet de diagnostiquer automatiquement la panne de l'appareil électronique.

La machine de recyclage comprend une mémoire permettant d'enregistrer des pannes ou composants défaillants d'appareils électroniques saisis par les utilisateurs successifs au cours du temps. La mémoire est ainsi enrichie au cours du temps par de nouvelles pannes détectées.

En variante, la mémoire peut être prévue dans un centre de contrôle distant, connecté à plusieurs machines de recyclage.

La machine de recyclage comprend également un microprocesseur comprenant un programme appelé réseau de neurones ANN (« Artificial Neuronal Network ») permettant de calculer statistiquement la panne ou le composant en panne d'un appareil électronique le plus probable en fonction des pannes ou composants défaillants précédemment enregistrés dans la mémoire et les nouvelles données de panne saisies par l'utilisateur.

Le réseau de neurones ANN est entraîné avec un panel de pannes répertoriées et compilées au cours de 10 années d'expériences de réparation (par exemple) et sur la base des déclarations du client qui seront validées par les tests du plugin.

En variante, le diagnostic automatique peut être combiné avec le diagnostic manuel de façon à compléter ce dernier.

Une première étape de diagnostic manuel est alors réalisée avant une deuxième étape de diagnostic automatique.

### Exemple détaillé d'un mode de réalisation possible.

Les figures A1, B1, B2, C1 à C8, D1 à D3 ci-annexées illustrent un mode de réalisation particulier de l'invention.

Le client (306-fig B2) se rend vers la face principale de la machine, la face de rachat/diagnostic /échange/troc (101-fig A1) dont il doit sélectionner l'appareil à échanger/diagnostiquer.

L'écran tactile (107-fig A1) fournit une interface graphique (501-fig D1,D2,D3) qui permet aux clients de sélectionner le type d'appareil à échanger: tablette (203-fig B1) ou smartphone (202-fig B1), ensuite il doit sélectionner la marque (503-fig D1) et le modèle (504-fig D2) de son appareil à échanger ou à recycler, ainsi qu'avoir les propositions des prix possibles (512-fig D3) triées par grade (515-fig D3) du modèle sélectionné (514-fig D3). Le système demande une pièce d'identité afin de vérifier l'identité du client (306-fig B2) (206 fig B1). Le client (306-fig B2) doit insérer sa carte d'identité dans l'emplacement dédié au scan des cartes ID (104 fig:A1). Si l'identité du client (306-fig B2) est validée, la porte (109 fig:A1) s'ouvre. Un connecteur (404-fig C1) correspondant à la marque (503-fig D1) et au modèle (504-fig D2) de l'appareil sélectionné se présente (514-fig D3). Le client (306-fig B2) doit connecter le connecteur (404 fig:C1) sur son appareil (514-fig D3). Si un appareil est détecté (209-fig B1), un message demande au client (306-fig B2) de poser l'appareil (514-fig D3) (402-fig C1) à l'intérieur de la chambre de diagnostic (406-fig C1).

Dès que le système détecte l'appareil (402-fig C1) dans la zone de diagnostic (405-fig C1), un message demande au client (306-fig B2) de confirmer la fermeture de la porte (109 fig A1). Le système va faire un premier diagnostic logiciel (211-fig B1), ainsi qu'un deuxième diagnostic physique (212-fig B1) qui vont permettre de savoir l'état (213-fig B1) de l'appareil (402-fig C1). L'estimation de la valeur de l'appareil (402-fig C1) se base sur son état (213-fig B1). Les appareils sont classifiés par grade A, B, C, selon leur état.

| | **Grade A** | **Grade B** | **Grade C** | |
|---|---|---|---|---|
| **Très bon état** | X | - | - | |
| **Bon état** | - | X | - | |
| **Non fonctionnel** | - | - | X | |

| | | **Très bon état** | **Bon état** | **Non fonctionnel** |
|---|---|---|---|---|
| **État physique** | Écran cassé | Non | Non | Oui |
| | Rayure | Non | Oui | Oui |
| | Réseau GSM | fonctionnel | fonctionnel | Non fonctionnel |
| | Wifi | fonctionnel | fonctionnel | Non fonctionnel |
| | Batterie | Bonne autonomie | fonctionnel | Faible/ Non fonctionnel |
| | Caméra (front/back) | fonctionnel | fonctionnel | Non fonctionnel |
| | Capteur | fonctionnel | fonctionnel | Non fonctionnel |
| | Bluetooth | fonctionnel | fonctionnel | Non fonctionnel |
| | Connecteur USB | fonctionnel | fonctionnel | Non fonctionnel |
| | Sortie audio | fonctionnel | fonctionnel | Non fonctionnel |
| **État Software** | Blacklisté | Non | Non | Oui |
| | Bloqué sur un operateur | Non | Oui | Oui |

Le système propose une liste d'appareils (214-fig B1) neufs ou de grade A équivalents à la valeur estimée de l'appareil (402-fig C1). Aussi le client (306-fig B2) peut choisir un nouvel appareil de valeur supérieure à celle estimée pour son ancien appareil (214-fig B1) à condition de payer la différence des valeurs.

Si le client (306-fig B2) refuse les offres proposées, la porte (109 fig A1) s'ouvre automatiquement, afin de permettre au client (306-fig B2) de récupérer son appareil (214-fig B1), ensuite la porte se referme.

Dans le cas où le client (306-fig B2) accepte l'une des offres proposées, le système sélectionne le produit (413-fig C7) sélectionné par le client (306-fig B2). La chambre de récupération (414-fig C7) se place au niveau de la zone de stockage (412-fig C7) du produit sélectionné (413-fig C7), le bras de sélection (411-fig C7), pousse le produit (413-fig C7) dans la chambre de récupération, la porte (416-fig C7-C8) s'ouvre et le client (306-fig B2) récupère son nouveau produit (413-fig C7), ensuite la porte (416-fig C7-C8) se referme. Le client (306-fig B2) doit récupérer sa facture ainsi que sa pièce d'identité. Dans ce cas d'acceptation de l'échange le système poursuit la récupération de l'appareil acheté (215-fig B1).

Après un nettoyage des données (226-fig B1), le système décroche l'appareil du connecteur (402-403-fig C1), en suite le débarrasseur (401-fig C1) pousse l'appareil vers la plateforme de stockage (408-fig C4). Cette plateforme permet le stockage de l'appareil (402-fig C1) dans les casiers de stockage (407-fig C5).

Un code-barres (227-fig B1) va être collé automatiquement sur l'appareil (214-fig B1). Ce code-barres va permettre l'identification et la localisation de l'appareil (214-fig B1).

Si l'appareil (402-fig C1) est de grade A, alors l'appareil doit être emballé et stocké dans le stock grade A (220-fig B1). Si l'appareil est un grade B (229-fig B1) l'appareil va être stocké dans le stock grade B (223-fig B1). Si l'appareil est un grade C (230-fig B1) l'appareil va être stocké dans le stock grade C (234-fig B1). Les stocks de grades B et C vont être récupérés (235-236-237-238-fig B1) pour être réparés et/ou recyclés.

Si l'appareil (214-fig B1) est de grade B ou C, alors dès que la plateforme de stockage (408-fig C4) reçoit l'appareil (214-fig B1), elle le redirige ver un casier de stockage vide. Ensuite le bras de stockage (410-fig C5) pousse l'appareil dans ce casier (407-fig C5).

Les figures D1 à D3 montrent différentes vues des écrans d'interface de la machine pour l'utilisateur.

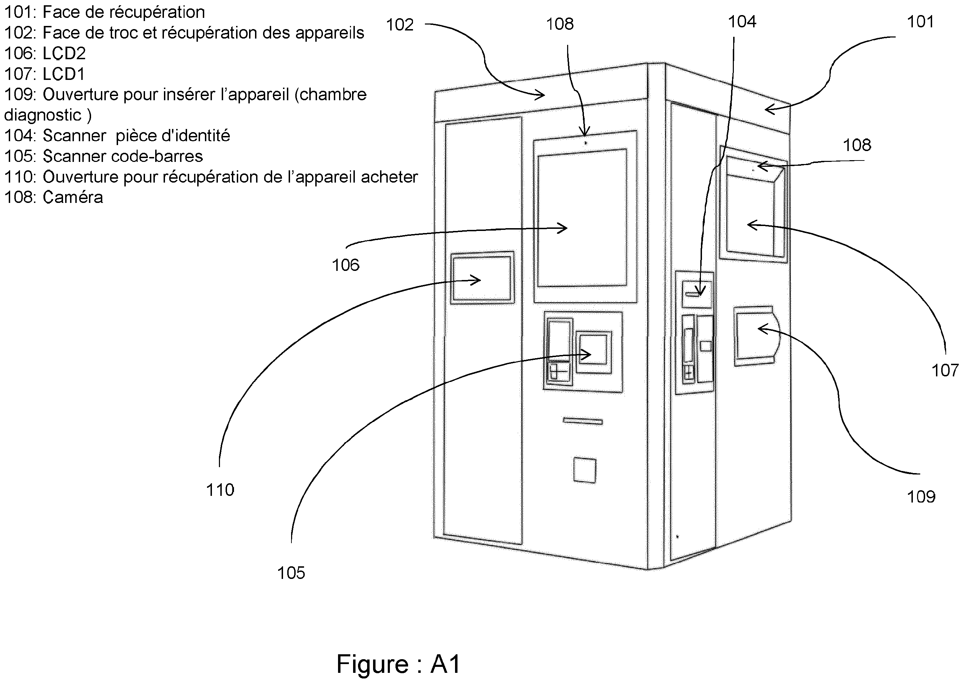

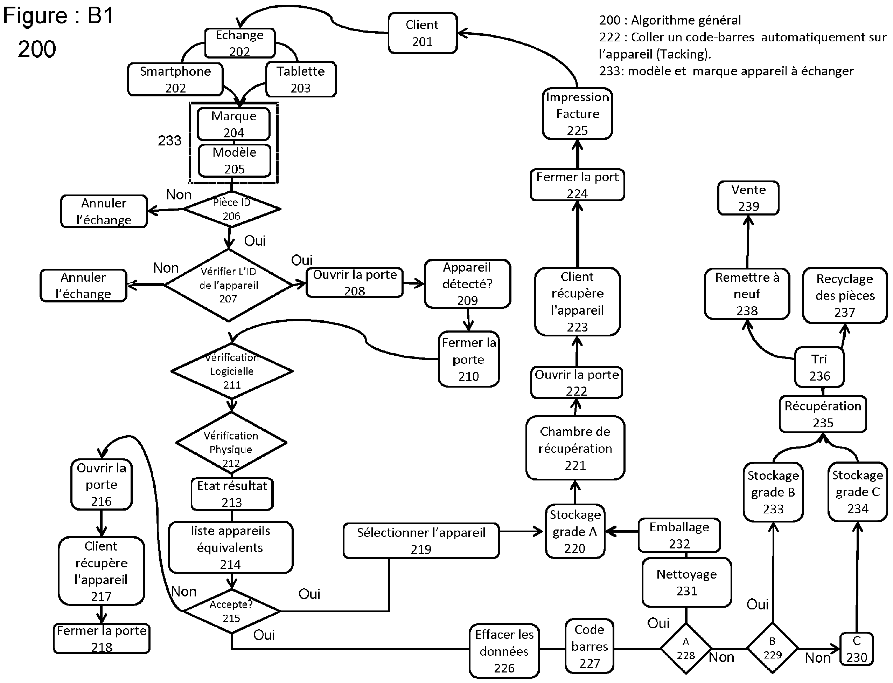

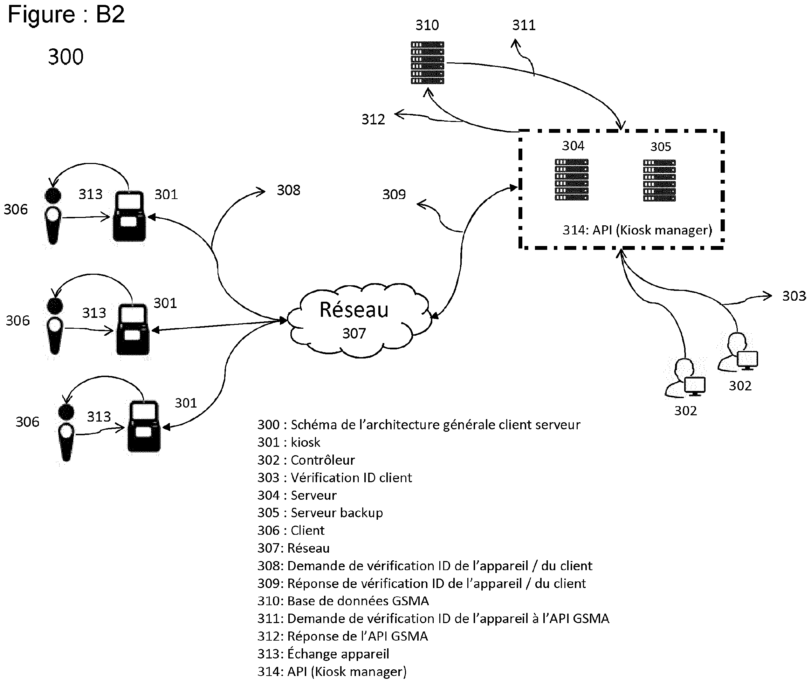

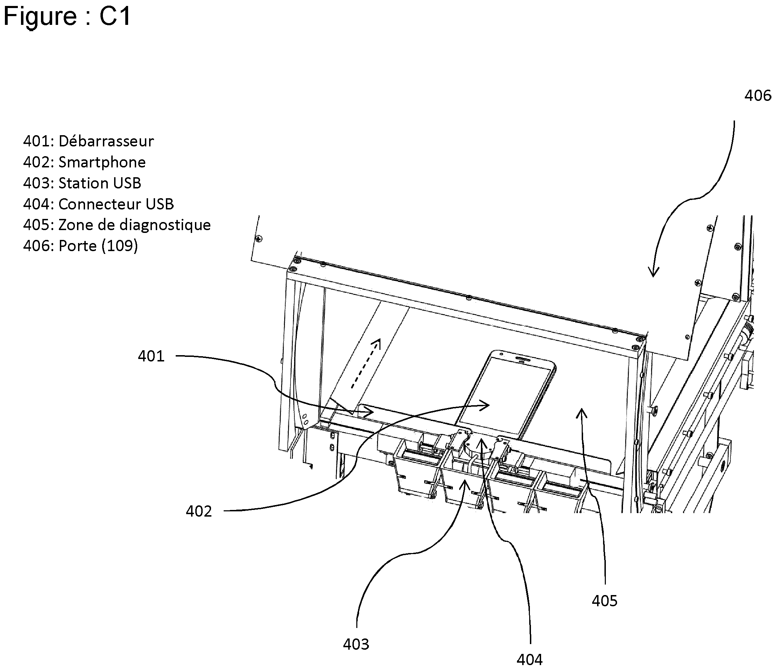

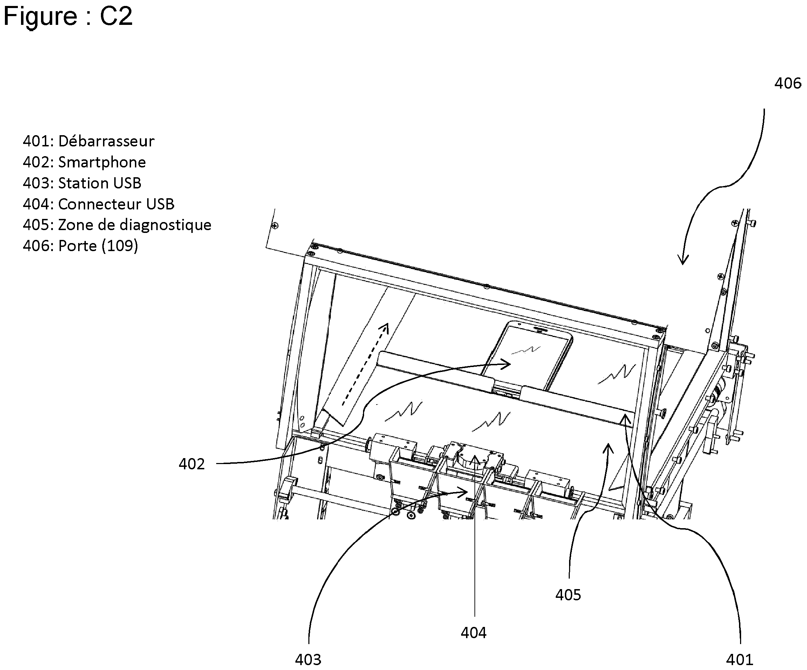

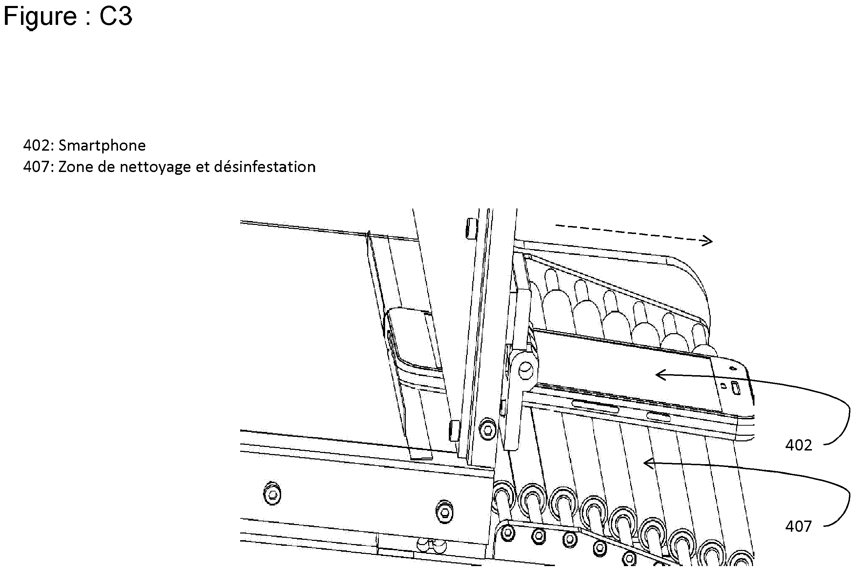

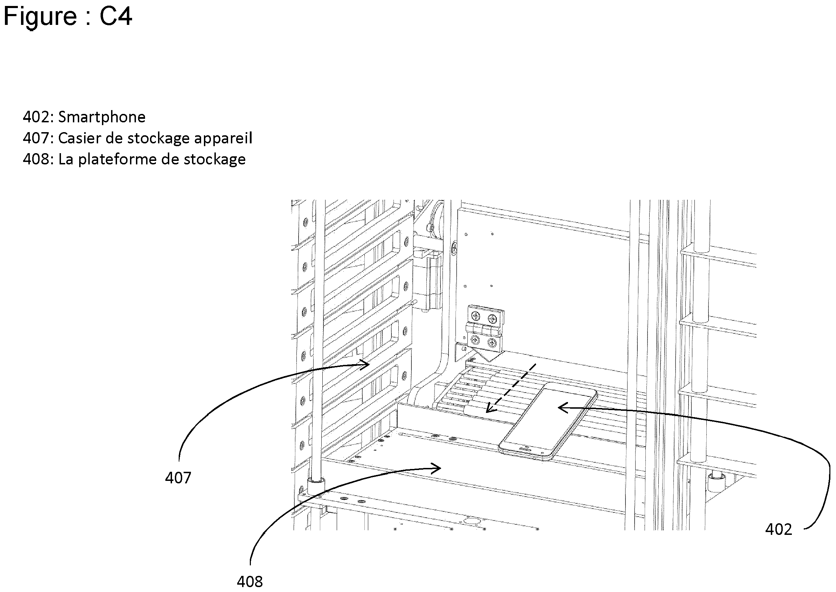

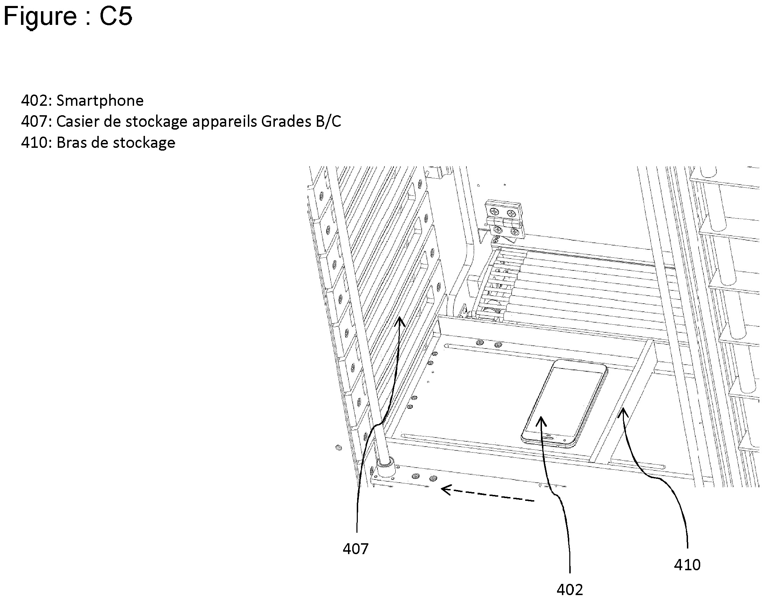

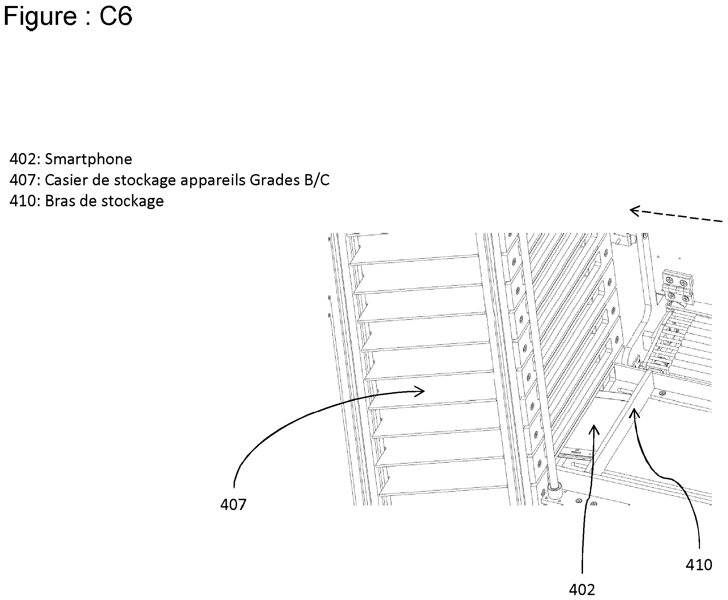

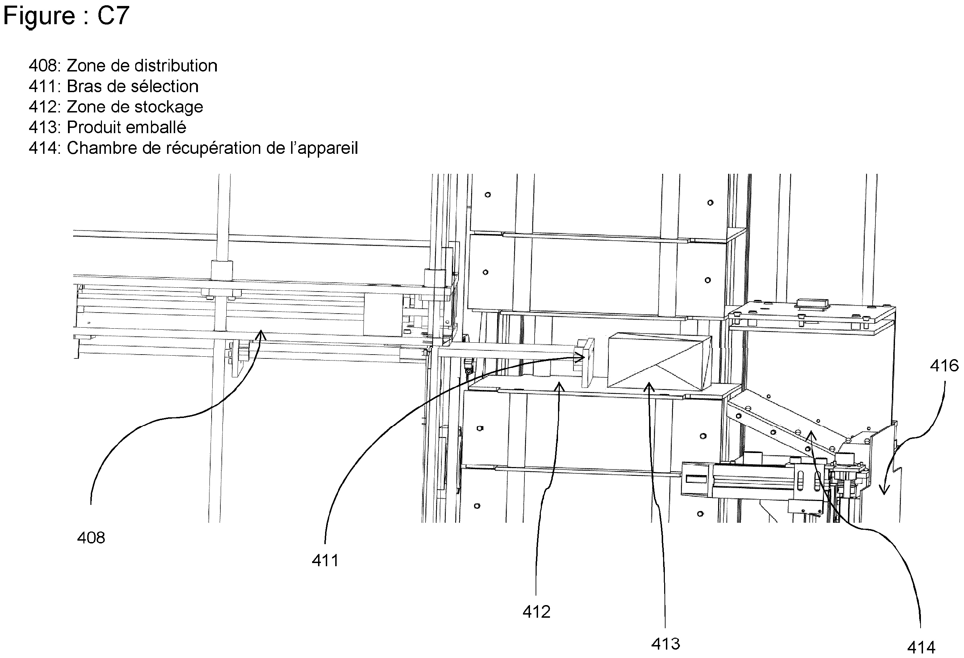

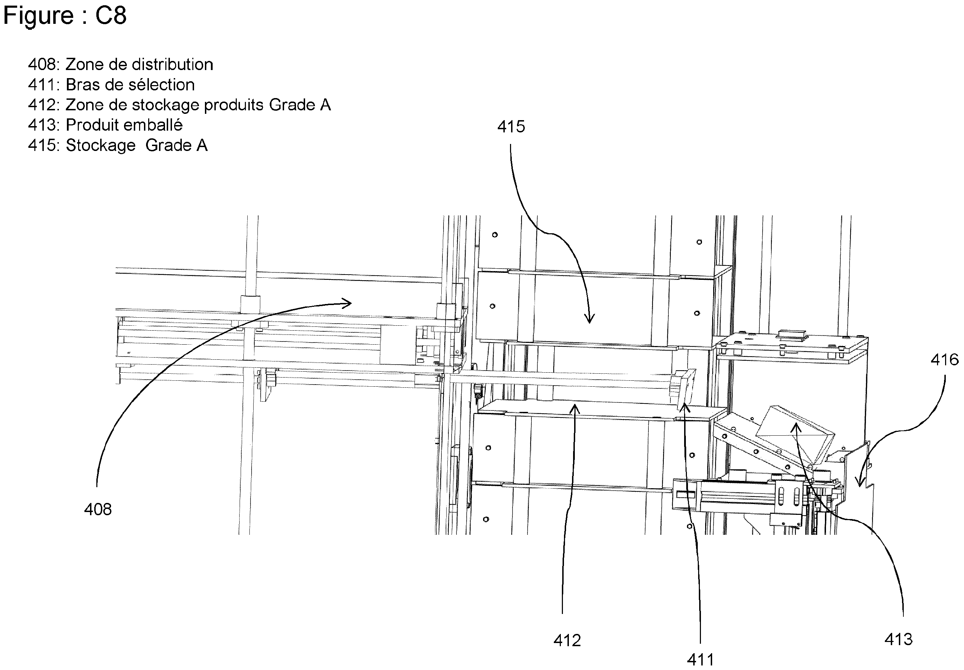

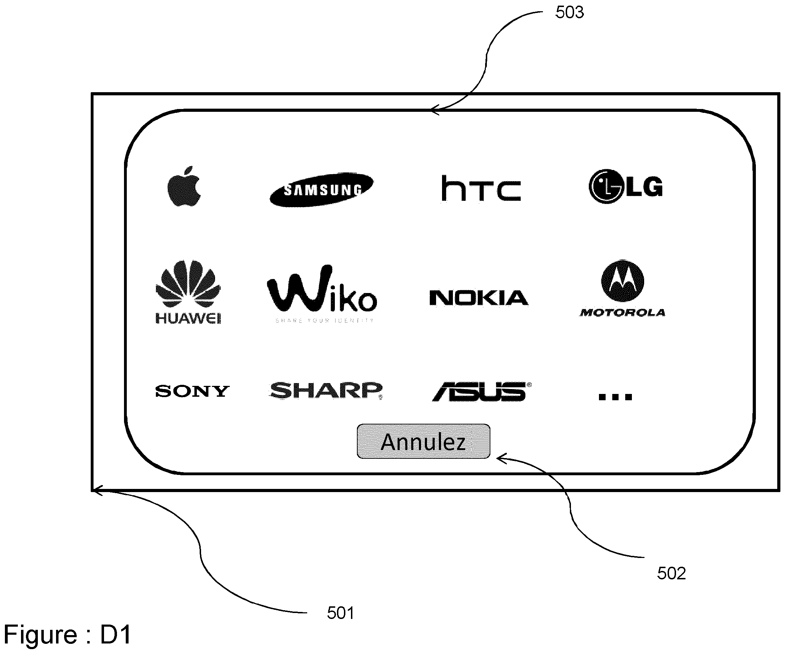

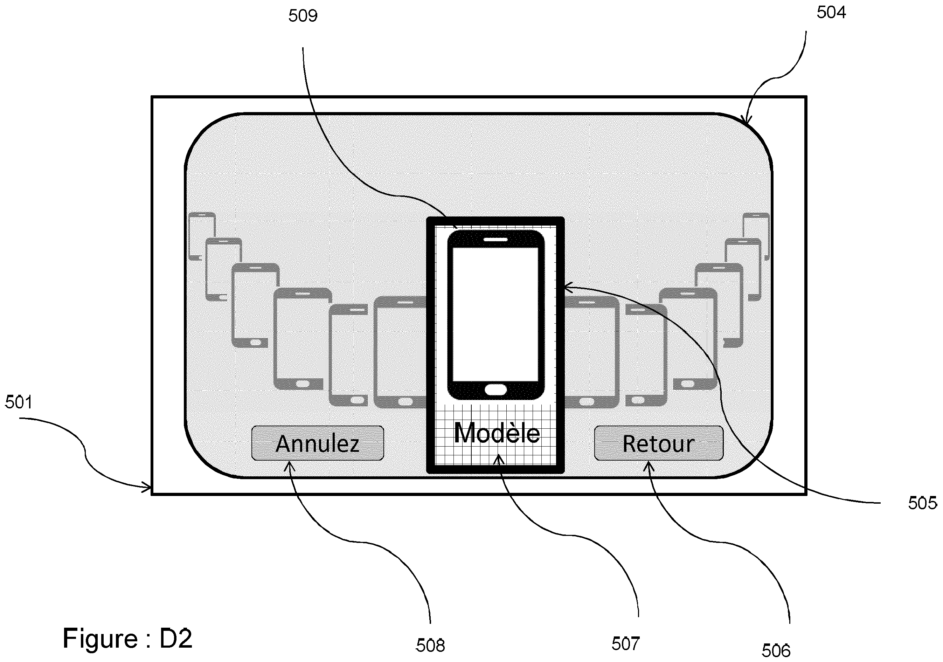

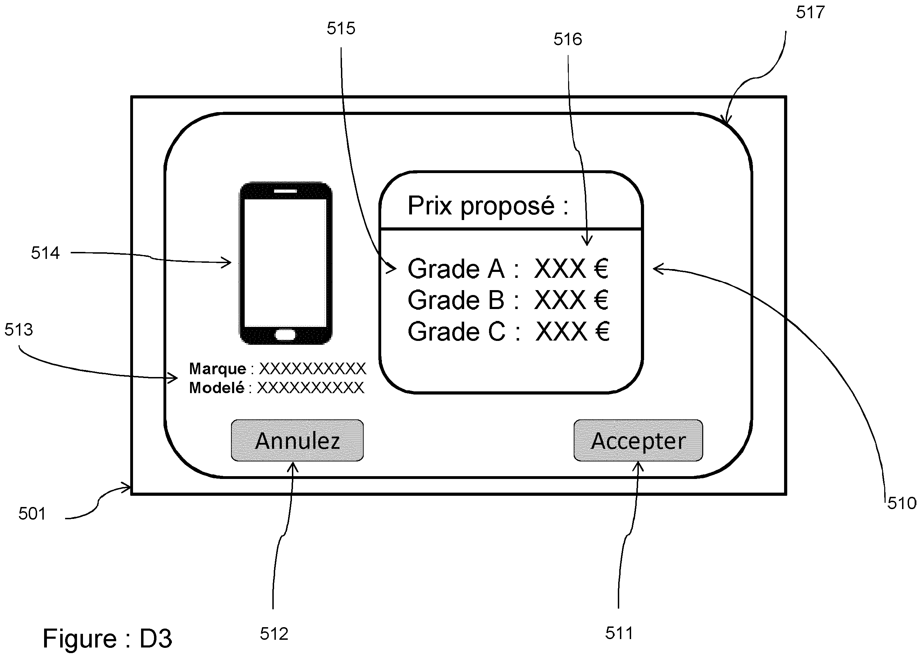

## Revendications

1. Machine de recyclage d'appareils électroniques comprenant :
- une interface utilisateur permettant de saisir et de visualiser des données concernant l'appareil électronique (402),
- une ouverture (109) pour insérer l'appareil électronique (402) dans la machine de recyclage,
- des moyens de diagnostic (211, 212, 405) permettant notamment de détecter la marque, le modèle, la version logicielle de l'appareil électronique (402), des moyens (407) pour stocker ledit appareil électronique (402) en vue de son recyclage,
- des moyens permettant à l'utilisateur de choisir entre une compensation financière, un échange de son appareil électronique (402) ou une combinaison de ces deux possibilités,
- des moyens pour emballer l'appareil électronique avec un emballage de protection (413), lesdits moyens d'emballage comprenant une zone d'emballage et un plateau de réception de l'appareil électronique placé dans la zone d'emballage, des moyens de convoyage (411) pour transférer l'appareil électronique (402) de l'ouverture jusqu'à la zone d'emballage, et une zone de stockage (412) pour stocker l'appareil électronique emballé,
dans laquelle la zone de stockage (412) est confondue avec la zone d'emballage, les appareils électroniques étant stockés dans la zone d'emballage et empilés les uns sur les autres sur le plateau de réception, deux appareils électroniques consécutifs étant séparés par une couche d'emballage de protection rabattue sur chaque appareil électronique par un dispositif de rabattage de couche d'emballage de protection.

2. Machine selon la revendication 1, **caractérisée en ce que** lesdits moyens de diagnostic (211, 212, 405) sont adaptés pour classer ledit appareil électronique (402) dans l'une des trois catégories suivantes : très bon état / bon état / non fonctionnel (228, 229, 203).

3. Machine de recyclage selon la revendication 1, **caractérisée en ce que** les moyens de convoyage (411) comprennent un support mobile supportant l'appareil électronique (402) et des moyens d'actionnement pour transférer le support mobile de l'ouverture jusqu'à la zone d'emballage, le support mobile étant guidé par au moins un rail de guidage (408) et étant positionné plus haut que le plateau de réception des moyens d'emballage de façon à permettre la chute de l'appareil électronique du support mobile jusqu'au plateau de réception.

4. Machine de recyclage selon l'une quelconque des revendications 1 à 3, **caractérisée en ce qu'**elle comprend des moyens de pesage de l'appareil électronique (402) destinés à peser l'appareil électronique dans la zone d'emballage, le plateau de réception de l'appareil électronique étant relié mécaniquement au moyen de pesage pour permettre la pesée de l'appareil électronique.

5. Machine de recyclage selon l'une quelconque des revendications 1 à 4, **caractérisée en ce qu'**elle comprend des moyens d'alimentation de l'appareil électronique comportant différents câbles d'alimentation (404) adaptés à différents modèles d'appareil électronique, et des moyens de déconnection du câble d'alimentation (404) pour le déconnecter automatiquement lors de la chute de l'appareil électronique (402) sur le plateau de réception du moyen d'emballage.

6. Machine de recyclage selon les revendications 1 et 5, **caractérisée en ce que** la longueur du câble d'alimentation (404) est inférieure à la distance entre les moyens d'alimentation et le plateau de réception du moyen d'emballage de façon à ce que le câble d'alimentation (404) se déconnecte automatiquement de l'appareil électronique (402) par traction lors de sa chute dans la zone d'emballage et avant son arrivée sur le plateau de réception du moyen d'emballage.

7. Procédé de fonctionnement d'une machine de recyclage d'appareils électroniques telle que définie par les revendications 1 à 6, comprenant les étapes suivantes :
- identification de l'appareil électronique (402),
- insertion de l'appareil électronique (402) dans une ouverture (109) prévue dans la machine de recyclage,
- diagnostic (211, 212) pour notamment détecter la marque, le modèle, la version logicielle de l'appareil électronique (402),
stockage dudit appareil électronique (402) en vue de son recyclage, le procédé comprenant une étape de choix par l'utilisateur entre une compensation financière, un échange de son appareil électronique (402) ou une combinaison de ces deux possibilités,
une étape de transfert de l'appareil électronique de l'ouverture (109) jusqu'à une zone d'emballage par des moyens de convoyage (411), une étape d'emballage de l'appareil électronique dans la zone d'emballage par des moyens d'emballage comportant un plateau de réception de l'appareil électronique, et une étape de stockage (412) de l'appareil électronique emballé dans une zone de stockage,
une étape de rabattage d'une couche d'emballage de protection sur l'appareil électronique (402) de façon à former un empilement d'appareils électroniques sur le plateau de réception, deux appareils électroniques consécutifs étant séparés par une couche d'emballage de protection.

8. Procédé selon la revendication 7, comprenant une étape de classement dudit appareil électronique dans l'une des trois catégories suivantes : très bon état / bon état / non fonctionnel (228, 229, 230).

9. Procédé selon l'une des revendications 7 ou 8, dans lequel les moyens de convoyage (411) comprennent un support mobile.

10. Procédé de fonctionnement selon la revendication 9, **caractérisée en ce qu'**il comprend : une étape de chute de l'appareil électronique (402) du support mobile des moyens de convoyage jusqu'au plateau de réception des moyens d'emballage positionné plus bas que le support mobile, et l'étape de rabattage de la couche d'emballage de protection sur l'appareil électronique (402) tombé sur le plateau de réception.

11. Procédé de fonctionnement selon l'une quelconque des revendications 7 à 10, **caractérisé en ce qu'**il comprend, avant l'étape d'identification, une étape de connexion d'un câble d'alimentation (404) sur l'appareil électronique (402) afin de le maintenir chargé pendant l'étape d'identification et une étape de déconnexion automatique du câble d'alimentation (404) avant son arrivée sur le plateau de réception des moyens d'emballage.

12. Procédé de fonctionnement selon la revendication 11, **caractérisé en ce que** la longueur du câble d'alimentation (404) est inférieure à la distance entre les moyens d'alimentation et le plateau de réception des moyens d'emballage, le câble d'alimentation (404) se déconnectant de l'appareil électronique (402) par traction lors de sa chute dans la zone d'emballage et avant son arrivée sur le plateau de réception du moyen d'emballage.

13. Procédé de fonctionnement selon l'une quelconque des revendications 11 ou 12, **caractérisé en ce qu'**il comprend, après l'étape de connexion du câble d'alimentation (404) sur l'appareil électronique (402), une étape d'identification automatique de l'appareil électronique (402) au moyen d'un programme d'identification transféré de la machine de recyclage vers l'appareil électronique via le câble d'alimentation (404), ledit programme d'identification étant installé dans l'appareil électronique afin de récupérer des données d'identification et de les transférer de l'appareil électronique vers un système de contrôle prévu dans la machine de recyclage.

## Patentansprüche

1. Recyclingmaschine für elektronische Geräte, umfassend:
- eine Benutzeroberfläche, die die Erfassung und Visualisierung von Daten über das elektronische Gerät (402) ermöglicht,
- eine Öffnung (109) zum Einsetzen des elektronischen Geräts (402) in die Recyclingmaschine,
- Diagnosemittel (211, 212, 405), die insbesondere die Erkennung der Marke, des Modells, der Softwareversion des elektronischen Geräts (402) ermöglichen, Mittel (407) zur Lagerung des elektronischen Geräts (402) zwecks dessen Wiederverwertung,
- Mittel, die es dem Benutzer ermöglichen, zwischen einem finanziellen Ausgleich, einem Austausch seines elektronischen Geräts (402) oder einer Kombination dieser beiden Möglichkeiten zu wählen,
- Mittel zum Verpacken des elektronischen Gerätes mit einer Schutzverpackung (413), wobei die Verpackungsmittel einen Verpackungsbereich und eine im Verpackungsbereich angeordnete Aufnahmeplatte des elektronischen Geräts, Fördermittel (411) zum Überführen des elektronischen Gerätes (402) von der Öffnung bis den Verpackungsbereich und einen Lagerbereich (412) zum Lagern des verpackten elektronischen Gerätes umfassen,
wobei der Lagerbereich (412) mit dem Verpackungsbereich verwechselt wird, wobei die elektronischen Geräte im Verpackungsbereich gelagert und übereinander auf der Aufnahmeplatte gestapelt werden, wobei zwei aufeinanderfolgende elektronische Geräte durch eine Schutzverpackungsschicht getrennt sind, die durch eine Schutzverpackungsschichtklappvorrichtung auf eines jeden elektronische Gerät umgeklappt ist.

2. Maschine nach Anspruch 1, **dadurch gekennzeichnet, dass** die Diagnosemittel (211, 212, 405) so ausgebildet ist, dass sie das elektronische Gerät (402) in eine der drei folgenden Kategorien einstufen: Sehr guter Zustand / guter Zustand / nicht funktionsfähig (228, 229, 203).

3. Recyclingmaschine nach Anspruch 1, **dadurch gekennzeichnet, dass** die Fördermittel (411) einen beweglichen Träger, der das elektronische Gerät (402) trägt, und Betätigungsmittel zum Überführen des beweglichen Trägers von der Öffnung bis den Verpackungsbereich umfassen, wobei der bewegliche Träger durch mindestens eine Führungsschiene (408) geführt wird und höher als die Aufnahmeplatte der Verpackungsmittel positioniert ist, um das Herabfallen des elektronischen Geräts vom beweglichen Träger bis die Aufnahmeplatte zu ermöglichen.

4. Recyclingmaschine nach einem der Ansprüche 1 bis 3, **dadurch gekennzeichnet, dass** sie Wägemittel des elektronischen Geräts (402) aufweist, die zum Wiegen des elektronischen Geräts im Verpackungsbereich bestimmt sind, wobei die Aufnahmeplatte des elektronischen Geräts mechanisch mit dem Wägemittel verbunden ist, um das Wiegen des elektronischen Geräts zu ermöglichen.

5. Recyclingmaschine nach einem der Ansprüche 1 bis 4, **dadurch gekennzeichnet, dass** sie Mittel zur Versorgung des elektronischen Gerätes mit verschiedenen Stromkabeln (404), die an verschiedene Modelle des elektronischen Gerätes angepasst sind, und Mittel zum Trennen des Stromkabels (404) zu dessen automatischen Trennen beim Fall des elektronischen Gerätes (402) auf die Aufnahmeplatte des Verpackungsmittels umfasst.

6. Recyclingmaschine nach den Ansprüchen 1 und 5, **dadurch gekennzeichnet, dass** die Länge des Stromkabels (404) kleiner ist als der Abstand zwischen den Versorgungsmitteln und der Aufnahmeplatte des Verpackungsmittels, so dass sich das Stromkabel (404) beim Fallen in den Verpackungsbereich und vor dessen Eintreffen auf der Aufnahmeplatte des Verpackungsmittels automatisch vom elektronischen Gerät (402) durch Ziehen trennt.

7. Verfahren zum Betreiben einer Maschine zum Recyceln von elektronischen Geräten nach den Ansprüchen 1 bis 6, umfassend die folgenden Schritte:
- Identifizierung des elektronischen Geräts (402),
- Einsetzen des elektronischen Gerätes (402) in eine Öffnung (109) in der Recyclingmaschine,
- Diagnose (211, 212) insbesondere zur Erkennung der Marke, des Modells, der Softwareversion des elektronischen Geräts (402),
Lagerung des elektronischen Geräts (402) zwecks dessen Recycling, wobei das Verfahren einen Schritt zum Auswählen durch den Benutzer zwischen einem finanziellen Ausgleich, einem Austausch seines elektronischen Geräts (402) oder einer Kombination dieser beiden Möglichkeiten umfasst,
einen Schritt zum Überführen des elektronischen Gerätes von der Öffnung (109) bis zu einem Verpackungsbereich durch Fördermittel (411), einen Schritt zum Verpacken des elektronischen Gerätes in den Verpackungsbereich durch Verpackungsmittel, die eine Aufnahmeplatte des elektronischen Geräts umfassen, und einen Schritt zum Lagern (412) des elektronischen Gerätes, das in einem Lagerbereich verpackt wurde,
ein Schritt zum Umklappen einer Schutzverpackungsschicht auf das elektronische Gerät (402), um einen Stapel von elektronischen Geräten auf der Aufnahmeplatte zu bilden, wobei zwei aufeinanderfolgende elektronische Geräte durch eine Schutzverpackungsschicht getrennt sind.

8. Verfahren nach Anspruch 7, umfassend einen Schritt zum Einstufen des elektronischen Gerätes in eine der drei folgenden Kategorien: Sehr guter Zustand / guter Zustand / nicht funktionsfähig (228, 229, 230).

9. Verfahren nach einem der Ansprüche 7 oder 8, wobei die Fördermittel (411) einen beweglichen Träger aufweisen.

10. Betriebsverfahren nach Anspruch 9, **dadurch gekennzeichnet, dass** es umfasst: Einen Schritt zum Fallenlassen des elektronischen Geräts (402) vom beweglichen Träger der Fördermittel bis zur Aufnahmeplatte der Verpackungsmittel, die niedriger als der bewegliche Träger positioniert ist, und den Schritt zum Umklappen der Schutzverpackungsschicht auf das elektronische Gerät (402), das auf die Aufnahmeplatte gefallen ist.

11. Betriebsverfahren nach einem der Ansprüche 7 bis 10, **dadurch gekennzeichnet, dass** es vor dem Identifizierungsschritt einen Schritt zum Verbinden eines Stromkabels (404) mit dem elektronischen Gerät (402), um es während des Identifizierungsschritts geladen zu halten, und einen Schritt zum automatischen Trennen des Stromkabels (404) vor seiner Ankunft auf der Aufnahmeplatte der Verpackungsmittel umfasst.

12. Betriebsverfahren nach Anspruch 11, **dadurch gekennzeichnet, dass** die Länge des Stromkabels (404) kleiner ist als der Abstand zwischen den Versorgungsmitteln und der Aufnahmeplatte der Verpackungsmittel, wobei das Stromkabel (404) sich vom elektronischen Gerät (402) durch Ziehen trennt, wenn es in den Verpackungsbereich fällt und bevor es auf der Aufnahmeplatte der Verpackungsmittel ankommt.

13. Betriebsverfahren nach einem der Ansprüche 11 oder 12, **dadurch gekennzeichnet, dass** es nach dem Schritt zum Verbinden des Stromkabels (404) mit dem elektronischen Gerät (402) einen Schritt zum automatischen Identifizieren des elektronischen Geräts (402) mittels eines Identifizierungsprogramms umfasst, das von der Recyclingmaschine zum elektronischen Gerät über das Stromkabel (404) übertragen wird, wobei das Identifizierungsprogramm im elektronischen Gerät installiert ist, um die Identifizierungsdaten abzurufen und sie vom elektronischen Gerät zu einem Kontrollsystem zu übertragen, das in der Recyclingmaschine vorgesehen ist.

## Claims

1. A machine for recycling electronic apparatuses comprising:
- a user interface making it possible to enter and to visualize data concerning the electronic apparatus (402),
- an opening (109) for inserting the electronic apparatus (402) into the recycling machine,
- diagnostic means (211, 212, 405) making it possible in particular to detect the brand, the model, the software version of the electronic apparatus (402), means (407) for storing said electronic apparatus (402) with a view to its recycling,
- means allowing the user to choose between a financial compensation, an exchange of his electronic apparatus (402) or a combination of these two possibilities,
- means for packaging the electronic apparatus with a protective packaging (413), said packaging means comprising a packaging area and a tray for receiving the electronic apparatus placed in the packaging area, conveying means (411) for transferring the electronic apparatus (402) from the opening to the packaging area, and a storage area (412) for storing the packaged electronic apparatus,
wherein the storage area (412) is coincident with the packaging area, the electronic apparatuses being stored in the packaging area and stacked on top of each other on the receiving tray, two consecutive electronic apparatuses being separated by a protective packaging layer folded over each electronic apparatus by a protective packaging layer folding device.

2. The machine according to claim 1, **characterized in that** said diagnostic means (211, 212, 405) are adapted to classify said electronic apparatus (402) into one of the following three categories: very good condition / good condition / inoperative (228, 229, 203).

3. The recycling machine according to claim 1, **characterized in that** the conveying means (411) comprise a mobile support supporting the electronic apparatus (402) and actuating means for transferring the mobile support from the opening to the packaging area, the mobile support being guided by at least one guide rail (408) and being positioned higher than the receiving tray of the packaging means so as to allow the fall of the electronic apparatus from the support mobile to the receiving tray.

4. The recycling machine according to any one of claims 1 to 3, **characterized in that** it comprises means for weighing the electronic apparatus (402) intended to weigh the electronic apparatus in the packaging area, the tray for receiving the electronic apparatus being mechanically connected to the weighing means to allow the weighing of the electronic apparatus.

5. The recycling machine according to any one of claims 1 to 4, **characterized in that** it comprises means for powering the electronic apparatus comprising different power cables (404) adapted to different models of electronic apparatus, and means for disconnecting the power cable (404) to disconnect it automatically when the electronic apparatus (402) falls onto the receiving tray of the packaging means.

6. The recycling machine according to claims 1 and 5, **characterized in that** the length of the power cable (404) is less than the distance between the power means and the receiving tray of the packaging means in such a way that the power cable (404) is automatically disconnected from the electronic apparatus (402) by traction when it falls into the packaging area and before his arrival on the receiving tray of the packaging means.

7. A method of operating a machine for recycling electronic apparatuses as defined by claims 1 to 6, comprising the following steps:
- identification of the electronic apparatus (402),
- insertion of the electronic apparatus (402) into an opening (109) provided in the recycling machine,
- diagnosis (211, 212) in particular to detect the brand, the model, the software version of the electronic apparatus (402),
storage of said electronic apparatus (402) with a view to its recycling, the method comprising a step of choosing by the user between a financial compensation, an exchange of his electronic apparatus (402) or a combination of these two possibilities,
a step of transferring the electronic apparatus from the opening (109) to a packaging area by conveying means (411), a step of packaging the electronic apparatus in the packaging area by packaging means including a tray for receiving the electronic apparatus, and a step of storing (412) the packaged electronic apparatus in a storage area,
a step of folding a protective packaging layer over the electronic apparatus (402) so as to form a stack of electronic apparatuses on the receiving tray, two consecutive electronic apparatuses being separated by a protective packaging layer.

8. The method according to claim 7, comprising a step of classifying said electronic apparatus into one of the following three categories: very good condition / good condition / inoperative (228, 229, 230).

9. The method according to any of claims 7 or 8, wherein the conveying means (411) comprise a mobile support.

10. The operating method according to claim 9, **characterized in that** it comprises: a step of falling the electronic apparatus (402) from the mobile support of the conveying means to the receiving tray of the packaging means positioned more lower than the mobile support, and the step of folding the protective packaging layer over the electronic apparatus (402) which has fallen onto the receiving tray.

11. The operating method according to any one of claims 7 to 10, **characterized in that** it comprises, before the identification step, a step of connecting a power cable (404) to the device electronics (402) in order to keep it charged during the identification step and a step of automatic disconnection of the power cable (404) before his arrival on the receiving tray of the packaging means.

12. The operating method according to claim 11, **characterized in that** the length of the power cable (404) is less than the distance between the power means and the receiving tray of the packaging means, the power cable (404) disconnecting from the electronic apparatus (402) by traction when its fall into the packaging area and before his arrival on the receiving tray of the packaging means.

13. The operating method according to any one of claims 11 or 12, **characterized in that** it comprises, after the step of connecting the power cable (404) to the electronic apparatus (402), a step of automatic identification of the electronic apparatus (402) by means of an identification program transferred from the recycling machine to the electronic apparatus via the power cable (404), said identification program being installed in the electronic apparatus in order to retrieve identification data and to transfer them from the electronic apparatus to a control system provided in the recycling machine.
